# EUROPEAN PATENT APPLICATION

(11) **EP 4 749 855 A1**
(43) Date of publication of application: **27.05.2026**
(21) Application number: 25200576.4
(22) Date of filing: 05.09.2025
(51) Int. Cl.: H02G 3/32

(54) **WIRE-RETAINING CLIP SYSTEMS AND METHODS**

(30) Priority: 22.11.2024 US 202418956666
(71) Applicant: The Boeing Company, Arlington, VA 22202 (US)
(72) Inventor: ZIEGLER, Kathryn Marie, ARLINGTON, 22202 (US); WENTLAND, Michael Liam, ARLINGTON, 22202 (US); BOMARK, Jake Lee, ARLINGTON, 22202 (US); BROCKETT, Adam Joseph, ARLINGTON, 22202 (US); THOMAS, Kyle Cameron, ARLINGTON, 22202 (US); DAVIS, Kenneth G., ARLINGTON, 22202 (US)
(74) Representative: Plasseraud IP

(57) **Abstract**

A clip system includes a base, a first cantilevered arm extending from the base, and a second cantilevered arm extending from the base. The base, the first cantilevered arm, and the second cantilevered arm are configured to cooperate to secure to an edge portion of a panel. A wire retainer outwardly extends from one of the base, the first cantilevered arm, or the second cantilevered arm. The wire retainer is configured to retain a portion of a wire.

## Description

### FIELD OF THE DISCLOSURE

Examples of the present disclosure generally relate to a clip system configured to secure to one or more panels and retain a portion of a wire, such as electrical wiring.

### BACKGROUND OF THE DISCLOSURE

Vehicles such as commercial aircraft include numerous mechanical components, electronic systems, and the like. As an example, a commercial aircraft includes an internal cabin having electrical wiring behind wall panels. For various reasons, the electrical wiring is often secured to portions of the wall panels. Notably, wiring can be adversely affected if it uncontrollably contacts a structure. Moreover, certain regulations, such as promulgated by the United States Federal Aviation Administration (FAA), require that electrical wiring be separated from certain structures (such as edges of composite panels) a particular distance.

Some interior panels for an internal cabin of an aircraft have potted inserts for electrical support ring posts or other fastener-based items that have a screwthread attachment. Such an area can be disposed between a strongback panel and a fuselage. The strongback contains potted inserts and additional wire attachment locations that can support routing.

However, utilizing existing provisions after the strongback is installed, such as during maintenance or retrofitting, may not be ergonomically easy, particularly in view of space constraints.

### SUMMARY OF THE DISCLOSURE

A need exists for an efficient, effective, and simple system and method for securing a wire, such as electrical wiring, to a panel.

With that need in mind, certain examples of the present disclosure provide clip systems, methods and systems according to the appended claims.

### BRIEF DESCRIPTION OF THE DRAWINGS

Figure 1 illustrates an isometric end view of a clip system, according to an example of the present disclosure.
Figure 2 illustrates a side view of the example clip system of Figure 1.
Figure 3 illustrates an isometric top view of the example clip system of Figure 1.
Figure 4 illustrates an isometric partial cross-sectional view of an example clip system through line 4-4 of Figure 3.
Figure 5 illustrates an end partial cross-sectional view of the example clip system through line 4-4 of Figure 3.
Figure 6 illustrates an isometric top view of the example clip system of Figure 1 secured to a panel, according to an example of the present disclosure.
Figure 7 illustrates an isometric bottom view of the example clip system of Figure 1 secured to a portion of the panel.
Figure 8 illustrates a top view of a clip system, according to an example of the present disclosure.
Figure 9 illustrates an end view of the clip system of Figure 8.
Figure 10 illustrates an end view of the clip system of Figure 8 securing a portion of a wire, according to an example of the present disclosure.
Figure 11 illustrates a perspective front view of an aircraft, according to an example of the present disclosure.
Figure 12 illustrates a flow chart of a method, according to an example of the present disclosure.

### DETAILED DESCRIPTION OF THE DISCLOSURE

The foregoing summary, as well as the following detailed description of certain embodiments will be better understood when read in conjunction with the appended drawings. As used herein, an element or step recited in the singular and preceded by the word "a" or "an" should be understood as not necessarily excluding the plural of the elements or steps. Further, references to "one embodiment" are not intended to be interpreted as excluding the existence of additional embodiments that also incorporate the recited features. Moreover, unless explicitly stated to the contrary, embodiments "comprising" or "having" an element or a plurality of elements having a particular condition can include additional elements not having that condition.

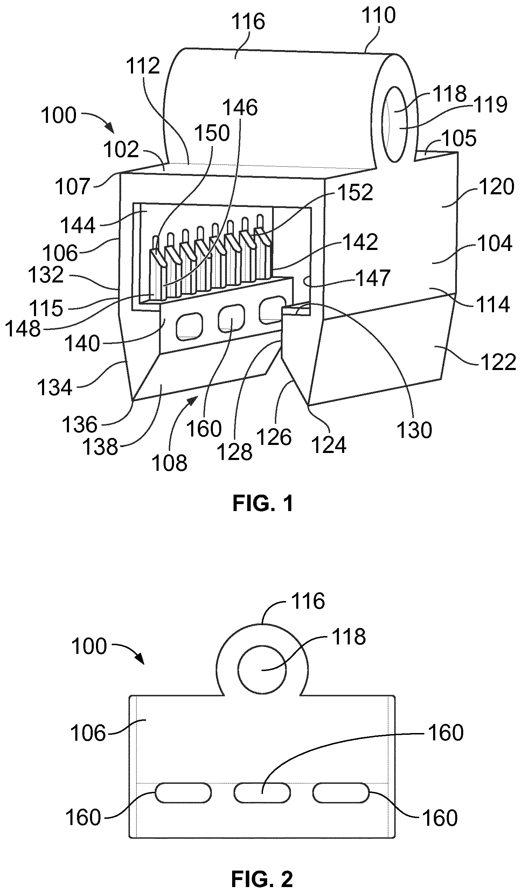

Figure 1 illustrates an isometric end view of a clip system 100, according to an example of the present disclosure. The clip system 100 includes a base 102, such as a flat wall. A first cantilevered arm 104 extends from a first end 105 of the base 102. A second cantilevered arm 106 extends from a second end 107 of the base 102. The first end 105 is opposite from the second end 107. The first cantilevered arm 104 is spaced apart from the second cantilevered arm 106 by the base 102. A passage 108 is defined between the base 102, the first cantilevered arm 104 and the second cantilevered arm 106. The passage 108 extends along and through an entire length of the clip system 100.

The clip system 100 also includes a wire retainer 110. In at least one example, the wire retainer 110 extends outwardly from an outer surface 112 of the base 102. In some examples, the wire retainer 110 can extend outwardly from an outer surface 114 of the first cantilevered arm 104 or an outer surface 115 of the second cantilevered arm 106. In at least one example, the clip system 100 can include a wire retainer 110 extending outwardly from the base 102, as well as one or both of the first cantilevered arm 104 and/or the second cantilevered arm 106.

In at least one example, the wire retainer 110 includes a tube 116 having a central channel 118 formed therethrough. In at least one example, the central channel 118 extends along and through an entire length of the tube 116. The central channel 118 can have a circular cross-section. The central channel 118 can have the same diameter along an entire length of the tube 116. In some examples, the diameter of the central channel 118 can differ at portions of the length of the tube 116. For example, the central channel 118 can be tapered, having a larger diameter at one end. An interior surface 119 of the tube 116 that defines the central channel 118 can be smooth. As another example, the interior surface 119 of the tube 116 can be threaded, and configured to threadably engage a threaded shaft of a fastener, such as a bolt or screw.

The wire retainer 110 is configured to retain a portion of a wire, such as electrical wiring, and space the portion of the wire a predetermined distance from a panel (not shown in Figure 1) on which the clip system 100 is secured. As an example, the portion of the wire can pass directly through and within the wire retainer 110. That is, the portion of the wire can be directly retained within the central channel 118 of the tube 116. The wire retainer 110, the tube 116 and the central channel 118 can be trimmed by a plane or curvilinear surface to open channel 118, such that the wire 220 can be more easily installed in the wire retainer 110. In at least one example, when the wire retainer 110 is cut by a plane to open the channel 118 (such as a half channel having a recess), then a window can be made under each side of the wire retainer 110 and the tube 116, such that a wire can be restrained in the channel 118 using zip-ties, wire-ties or other wire-restraining devices that secure wire 220 into the now open channel 118. As another example, a fastener, such as a bolt, can be retained by the tube 116. The fastener can be coupled to another component, such as a clamp, which securely retains a portion of the wire. As another example, a zip tie, strap, string, or the like can pass through the central channel 118 of the tube 116, and secure a portion of the wire to the clip system 100.

As shown, the first cantilevered arm 104 includes a wall 120 downwardly extending from the base 102 The wall 120 can be perpendicular to the base 102. The wall 120 connects to an inwardly canted distal end 122. The inwardly canted distal end 122 inwardly angles toward the passage 108. The inwardly canted distal end 122 terminates at a distal edge 124. An interior ramped surface 126 extends from the distal edge 124 toward the base 102. The interior ramped surface 126, in turn, connects to an upright interior wall 128, which connects to a flat ledge 130. The upright interior wall 128 can be parallel with the wall 120, and perpendicular to the base 102. The flat ledge 130 can be perpendicular to the upright interior wall 128, and parallel with the base 102.

Similarly, the second cantilevered arm 106 includes a wall 132 downwardly extending from the base 102 The wall 132 can be perpendicular to the base 102. The wall 132 connects to an inwardly canted distal end 134. The inwardly canted distal end 134 inwardly angles toward the passage 108. The inwardly canted distal end 134 terminates at a distal edge 136. An interior ramped surface 138 extends from the distal edge 136 toward the base 102. The interior ramped surface 138, in turn, connects to an upright interior wall 140, which connects to a flat ledge 142. The upright interior wall 140 can be parallel with the wall 132, and perpendicular to the base 102. The flat ledge 142 can be perpendicular to the upright interior wall 140, and parallel with the base 102.

In at least one example, fingers 146 extend upwardly from the flat ledge 142 and connect to an interior surface 144 of the wall 132. Fingers 146 also extend upwardly from the flat ledge 130 and connect to an interior surface 147 of the wall 120. The fingers 146 include a root 148 extending from the flat ledge 142, and a beveled tip 150 connected to the interior surface 144. Neighboring fingers 146 are spaced apart from one another by a gap 152. The gap 152 is configured to receive and retain a reciprocal finger of a portion of a panel. In this manner, the fingers 146 cooperate with the reciprocal fingers to provide an interlocking connection, to provide a secure connection between the clip system 100 and the panel. In some examples, the clip system 100 may not include the fingers 146.

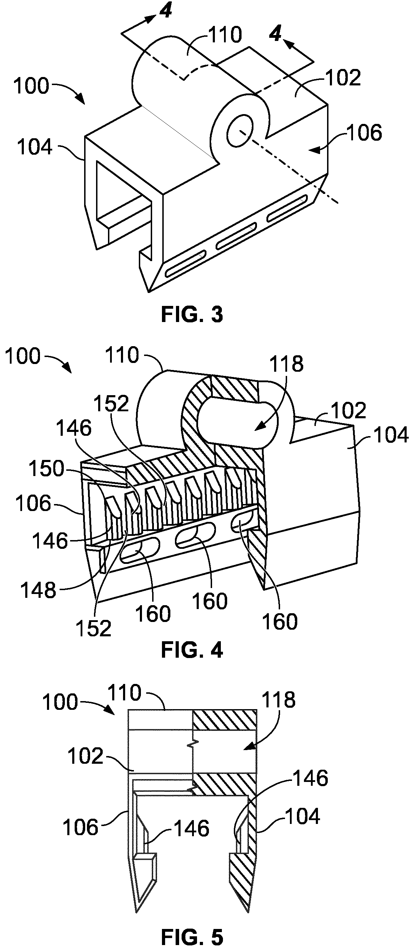

Figure 2 illustrates a side view of the clip system 100. Figure 3 illustrates an isometric top view of the clip system 100. Figure 4 illustrates an isometric partial cross-sectional view of the clip system 100 through line 4-4 of Figure 3. Figure 5 illustrates an end partial cross-sectional view of the clip system 100 through line 4-4 of Figure 3. Referring to Figures 1-5, the clip system 100 includes windows 160 formed through the second cantilevered arm 106. The first cantilevered arm 104 may not include the windows 160. In at least one other example, the first cantilevered arm 104 includes the windows 160, and the second cantilevered arm 106 does not include the windows 160. As another example, both the first cantilevered arm 104 and the second cantilevered arm 106 include one or more windows 160.

The second cantilevered arm 106 can include three windows 160. In some examples, more or fewer windows 160 can be used. For example, the clip system 100 can include a single window, two windows, or four or more windows. The windows 160 are longitudinally aligned and formed through the inwardly canted distal end 134. The windows 160 allow an individual to view through the clip system 100 into the passage 108. In this manner, the windows 160 allow an individual to inspect a connection between the clip system 100 and a panel to ensure proper installation. Further, the windows 160 provide a passage for adhesive to be applied between the clip system 100 and the panel to provide additional securing. As another example, the windows 160 can provide a through-hole for additional fasteners, such as pins, staples, or the like. Alternatively, the clip system 100 may not include any windows.

In at least one example, the clip system 100 is formed of a resilient material, such as a flexible plastic, elastomeric material, and/or the like. As such, the first cantilevered arm 104 and the second cantilevered arm 106 are configured to deflect away and toward each other to securely connect the clip system 100 to an edge of a panel.

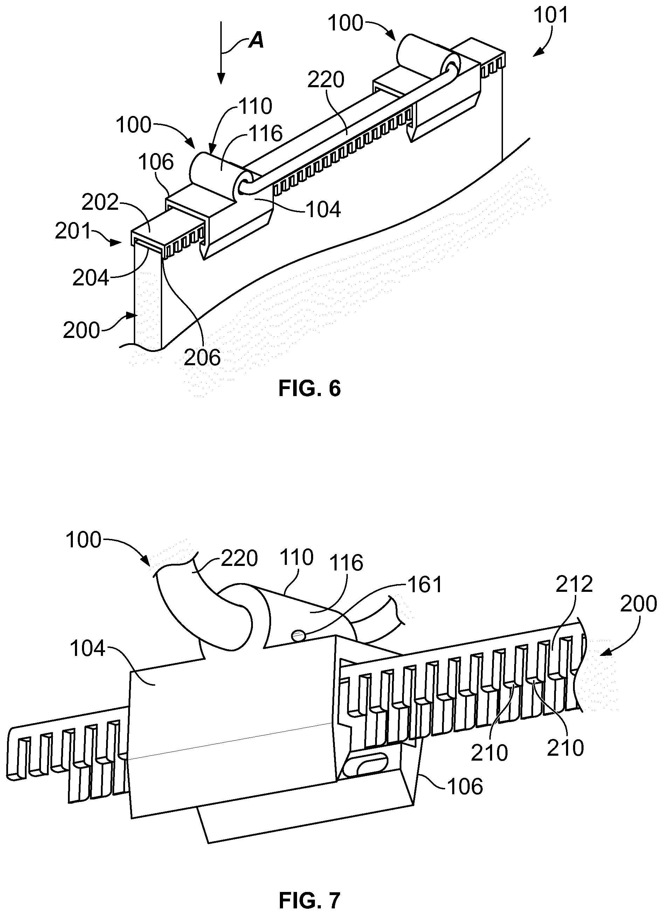

Figure 6 illustrates an isometric top view of the clip system 100 secured to a panel 200, according to an example of the present disclosure. A system 101 includes the clip system 100 secured to the panel 200. The clip system 100 secures to an edge portion 201 of the panel 200. The panel 200 can include edge trim 202 which covers an edge 204 of the panel 200. The clip system 100 secures to the edge trim 202. As another example, the clip system 100 secures directly to the edge 204 of the panel 200.

In some examples, as illustrated in Figure 6, a clip system and an additional clip system may be secured to the same panel and may be configured to retain a same wire. In some examples, not illustrated here, a clip system and an additional clip system may be secured to the same panel and may be configured to retain different wires. In certain embodiments, the clip system and the additional clip system may be secured to a same edge trim of the panel. In further examples, the edge trim may comprise reciprocal fingers, and the clip system and the additional clip system may each comprise fingers that interlock with the reciprocal fingers of the edge trim, wherein the clip systems are separated by a predetermined distance along the edge trim. The use of a plurality of clip systems on a same panel, and in some examples on a same edge trim, may facilitate the retention and routing of a wire or of different wires in a manner that ensures compliance with applicable regulations or standards, such as those requiring specific separation distances between wiring and panel edges or other structures. This arrangement may also enhance the mechanical security and positional stability of the retained wire, thereby contributing to a robust and compliant installation.

Referring to Figures 1-6, in order to secure the clip system 100 to the panel 200, the first cantilevered arm 104 and the second cantilevered arm 106 are straddled over the edge trim 202, and the clip system 100 is then pressed in the direction of arrow A, thereby deflecting the first cantilevered arm 104 and the second cantilevered arm 106 away from one another, until edges 206 of the edge trim 202 slide over the interior ramped surfaces 126 and 138, and catch on the flat ledges 130 and 142, at which point the first cantilevered arm 104 and the second cantilevered arm 106 deflect back toward one another, thereby securing the clip system 100 to the panel 200. Because the wire retainer 110 is spaced apart from the edge trim 202 and the edge 204 of the panel 200, the wire retainer 110 automatically ensures that a portion of a wire retained by the wire retainer 110 is spaced apart from the edge 204 and edges 206 of the panel 200, thereby preventing any damage to the wire by the panel 200.

As noted, the windows 160 allow for inspection of a connection between the clip system 100 and the panel 200. Further, the windows 160 allow for insertion of additional fastening agents, such as adhesives, staples, pins, or the like.

Figure 7 illustrates an isometric bottom view of the clip system 100 secured to a portion of the panel. Referring to Figures 1-7, the edge trim 202 can include reciprocal fingers 210 separated by gaps 212. The reciprocal fingers 210 can interlock with the fingers 146 of the first cantilevered arm 104 and the second cantilevered arm 106 to provide additional securing and retaining force between the clip system 100 and the panel 200. The interlocking connection prevents the clip system 100 from axially sliding or shifting in relation to the panel. As shown, a portion of a wire 220 can pass directly through the wire retainer 110. For example, a portion of the wire 220 can be directly secured within the tube 116. As another example, a string, zip tie, or the like can pass directly through the wire retainer 110 and be used to secure the wire 220 to the wire retainer 110. In some examples, the wire retainer 110 can retain a portion of a fastener, which is used to retain the portion of the wire 220.

In at least one example, one or more windows 161 can be formed through the tube 116. The windows 161 allow ties, such as zip ties, to be used to restrain the wire 220 in the channel 118. In some examples, the tube 116 may not include the windows.

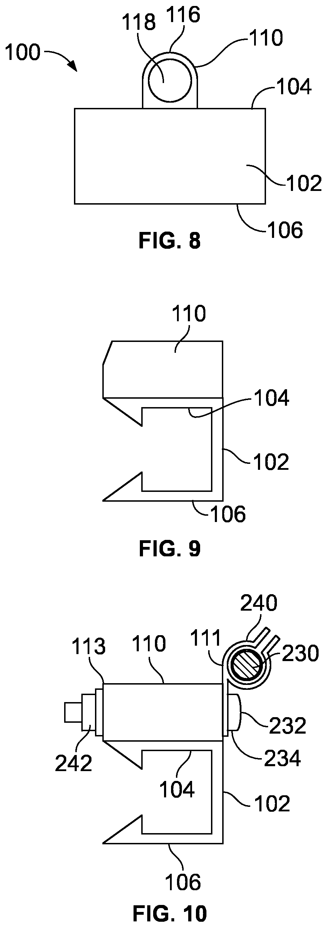

Figure 8 illustrates a top view of a clip system 100, according to an example of the present disclosure. Figure 9 illustrates an end view of the clip system 100 of Figure 8. Referring to Figures 8 and 9, in at least one example, the wire retainer 110 extends outwardly from the first cantilevered arm 104 (or, in some examples, the second cantilevered arm 106).

Figure 10 illustrates an end view of the clip system 100 of Figure 8 securing a portion of a wire, according to an example of the present disclosure. As shown, the wire retainer 110 can receive and retain a portion of a fastener 232, such as a bolt, which has a head 234 extending from a first end 111 of the wire retainer 110. The fastener 232 secures a wire clamp 240 to the wire retainer 110. The wire clamp 240 securely clamps around a portion of a wire 230. A nut 242 secures to the fastener 232 at the opposite second end 113 of the wire retainer 110. In some examples, an internal surface of the wire retainer 110 defining the central channel 118 (shown in Figure 8) can be threaded, and configured to threadably engage a threaded shaft of the fastener 232, such that a nut may not be needed to secure the fastener to the wire retainer 110.

Referring to Figures 1-10, examples of the present disclosure provide a clip system 100 having symmetrical cantilevered arms (that is, the first cantilevered arm 104 and the second cantilevered arm 106), which are configured to deflect and snapably secure onto an edge of the panel 200, such as edge trim 202 of a composite panel. The clip system 100 includes the wire retainer 110, which is configured to retain a portion of a wire (either directly, or via a fastener, clamp, and/or the like) a predetermined distance away from the edge of the panel 200. The wire retainer 110 is readily visible to an individual, and is easily accessible, as it outwardly extends form a portion of the clip system 100 (such as outwardly extending from the base 102, the first cantilevered arm 104, or the second cantilevered arm 106). As an example, the clip system 100 can be used in conjunction with additional clip systems 100 to route pigtails of lights through a cavity of a passenger service unit (PSU). In at least one example, the first cantilevered arm 104 and the second cantilevered arm 106 are configured to fit over edges of access cutouts, and engage with retention features installed on a panel.

As described herein, the clip system 100 includes the base 102, the first cantilevered arm 104 extending from the base 102, and the second cantilevered arm 106 extending from the base 102. The base 102, the first cantilevered arm 104, and the second cantilevered arm 106 are configured to cooperate to secure to an edge portion of a panel 200. The wire retainer 110 outwardly extends from one of the base 102, the first cantilevered arm 104, or the second cantilevered arm 106. The wire retainer 110 is configured to retain a portion of a wire 220.

In at least one example, the wire retainer 110 outwardly extends from the base 102. As another example, he wire retainer 110 outwardly extends from the first cantilevered arm 104 or the second cantilevered arm 106.

In at least one example, the wire retainer 110 is configured to directly retain a portion of the wire 220 within the central channel 118 of the tube 116. As another example, the wire retainer 110 is configured to retain a portion of a fastener 232 that is configured to secure a wire clamp 240 to the wire retainer 110. In this example, the wire clamp 240 is configured to retain the portion of the wire 220 (or 230). As another example, the wire retainer 110 can be bisected by a plane or surface such that the central channel of tube 118 is an open channel that can retain a portion of the wire 220, thereby allowing for the wire 220 to be easily directly retained by the wire retainer 110.

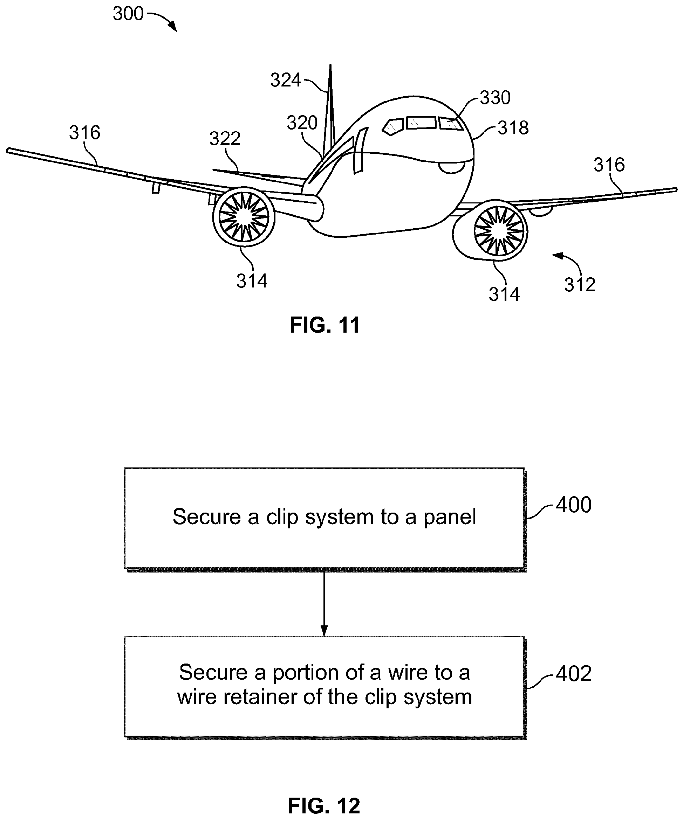

Figure 11 illustrates a perspective front view of an aircraft 300, according to an example of the present disclosure. The aircraft 300 includes a propulsion system 312 that includes engines 314, for example. In some examples, the propulsion system 312 may include more engines 314 than shown. The engines 314 are carried by wings 316 of the aircraft 300. In other examples, the engines 314 may be carried by a fuselage 318 and/or an empennage 320. The empennage 320 may also support horizontal stabilizers 322 and a vertical stabilizer 324.

The fuselage 318 of the aircraft 300 defines an internal cabin 330, which includes a flight deck or cockpit, one or more work sections (for example, galleys, personnel carry-on baggage areas, and the like), one or more passenger sections (for example, first class, business class, and coach sections), one or more lavatories, and/or the like. Referring to Figures 1-11, the clip systems 100 described herein can be secured to one or more panels within the aircraft 300, and used to retain and route portions of wires.

Alternatively, instead of an aircraft, the clip systems 100 as described herein can be used with various other vehicles, such as automobiles, buses, locomotives and train cars, watercraft, spacecraft, and the like. Further, the clip systems 100 can be used in relation to fixed structures, such as residential or commercial buildings. Also, the clip systems 100 can be used with respect to various different systems, appliances, components, or the like.

Figure 12 illustrates a flow chart of a method, according to an example of the present disclosure. Referring to Figures 1-12, at 400, a clip system 100 is secured to a panel 200. As described, the first cantilevered arm 104 and the second cantilevered arm 106 secure to an edge portion of a panel 200. At 402, a portion of a wire 220 is secured to the wire retainer 110 of the clip system 100. The portion of the wire 220 can be directly secured within the wire retainer 110, or a fastener can be used to secure a wire clamp to the wire retainer 110. The wire clamp can be used to secure the portion of the wire to the wire retainer 110.

Further, the disclosure includes examples according to the following clauses:
Clause 1. A clip system comprising:
   a base;
   a first cantilevered arm extending from the base;
   a second cantilevered arm extending from the base, wherein the base, the first cantilevered arm, and the second cantilevered arm are configured to cooperate to secure to an edge portion of a panel; and
   a wire retainer outwardly extending from one of the base, the first cantilevered arm, or the second cantilevered arm, wherein the wire retainer is configured to retain a portion of a wire.
Clause 2. The clip system of Clause 1, wherein the wire retainer outwardly extends from the base.
Clause 3. The clip system of Clause 1, wherein the wire retainer outwardly extends from one of the first cantilevered arm or the second cantilevered arm.
Clause 4. The clip system of any of Clauses 1-3, wherein the wire retainer comprises a tube defining a central channel.
Clause 5. The clip system of Clause 4, wherein an interior surface of the tube defining the central channel is threaded.
Clause 6. The clip system of Clauses 4 or 5, wherein the wire retainer is configured to directly retain a portion of the wire within the central channel.
Clause 7. The clip system of any of Clauses 1-5, wherein the wire retainer is configured to retain a portion of a fastener that is configured to secure a wire clamp to the wire retainer, and wherein the wire clamp is configured to retain the portion of the wire.
Clause 8. The clip system of any of Clauses 1-7, wherein the first cantilevered arm and the second cantilevered arm comprise fingers configured to interlock with reciprocal fingers of the edge portion of the panel.
Clause 9. The clip system of any of Clauses 1-8, wherein one or both of the first cantilevered arm or the second cantilevered arm comprise one or more windows.
Clause 10. The clip system of any of Clauses 1-9, wherein the edge portion of the panel comprises an edge trim covering an edge of the panel.
Clause 11. A method for a clip system comprising:
   a base;
   a first cantilevered arm extending from the base;
   a second cantilevered arm extending from the base, wherein the base, the first cantilevered arm, and the second cantilevered arm are configured to cooperate to secure to an edge portion of a panel; and
   a wire retainer outwardly extending from one of the base, the first cantilevered arm, or the second cantilevered arm, wherein the wire retainer is configured to retain a portion of a wire,
   the method comprising:
      securing the clip system to the edge portion of the panel; and
      securing the portion of the wire to the wire retainer.
Clause 12. A system comprising:
   a panel including an edge portion;
   a wire; and
   a clip system secured to the panel, wherein the clip system comprises:
      a base;
      a first cantilevered arm extending from the base;
      a second cantilevered arm extending from the base, wherein the base, the first cantilevered arm, and the second cantilevered arm cooperate to secure to the edge portion of a panel; and
      a wire retainer outwardly extending from one of the base, the first cantilevered arm, or the second cantilevered arm, wherein the wire retainer retains a portion of the wire.
Clause 13. The system of Clause 12, wherein the wire retainer outwardly extends from the base.
Clause 14. The system of Clause 12, wherein the wire retainer outwardly extends from one of the first cantilevered arm or the second cantilevered arm.
Clause 15. The system of any of clauses 12-14, wherein the wire retainer comprises a tube defining a central channel.
Clause 16. The system of Clause 15, wherein the wire retainer is configured to directly retain a portion of the wire within the central channel.
Clause 17. The system of any of Clauses 12-15, wherein the wire retainer retains a portion of a fastener that secures a wire clamp to the wire retainer, and wherein the wire clamp retains the portion of the wire.
Clause 18. The system of any of Clauses 12-17, wherein the first cantilevered arm and the second cantilevered arm comprise fingers that interlock with reciprocal fingers of the edge portion of the panel.
Clause 19. The system of any of Clauses 12-18, wherein one or both of the first cantilevered arm or the second cantilevered arm comprise one or more windows.
Clause 20. The system of any of Clauses 12-19, wherein the edge portion of the panel comprises an edge trim covering an edge of the panel.

As described herein, examples of the present disclosure provide efficient, effective, and simple systems and methods for securing a wire, such as electrical wiring, to one or more panels.

While various spatial and directional terms, such as top, bottom, lower, mid, lateral, horizontal, vertical, front and the like can be used to describe embodiments of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described embodiments (and/or aspects thereof) can be used in combination with each other. In addition, many modifications can be made to adapt a particular situation or material to the teachings of the various embodiments of the disclosure without departing from their scope. While the dimensions and types of materials described herein are intended to define the parameters of the various embodiments of the disclosure, the embodiments are by no means limiting and are example embodiments. Many other embodiments will be apparent to those of skill in the art upon reviewing the above description. The scope of the various embodiments of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various embodiments of the disclosure, including the best mode, and also to enable any person skilled in the art to practice the various embodiments of the disclosure, including making and using any devices or systems and performing any incorporated methods. The patentable scope of the various embodiments of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A clip system (100) comprising:
a base (102);
a first cantilevered arm (104) extending from the base (102);
a second cantilevered arm (106) extending from the base (102), wherein the base (102), the first cantilevered arm (104), and the second cantilevered arm (106) are configured to cooperate to secure to an edge portion of a panel (200); and
a wire retainer (110) outwardly extending from one of the base (102), the first cantilevered arm (104), or the second cantilevered arm (106), wherein the wire retainer (110) is configured to retain a portion of a wire (220,230).

2. The clip system (100) of claim 1, wherein the wire retainer (110) outwardly extends from the base (102).

3. The clip system (100) of claim 1, wherein the wire retainer (110) outwardly extends from one of the first cantilevered arm (104) or the second cantilevered arm (106).

4. The clip system (100) of any of the above claims, wherein the wire retainer (110) comprises a tube (116) defining a central channel (118).

5. The clip system (100) of claim 4, wherein an interior surface (119, 144, 147) of the tube (116) defining the central channel (118) is threaded.

6. The clip system (100) of claim 4 or of claim 5, wherein the wire retainer (110) is configured to directly retain a portion of the wire (220,230) within the central channel (118).

7. The clip system (100) of any of claims 1 to 5, wherein the wire retainer (110) is configured to retain a portion of a fastener (232) that is configured to secure a wire clamp (240) to the wire retainer (110), and wherein the wire clamp (240) is configured to retain the portion of the wire (220,230).

8. The clip system (100) of any of the above claims, wherein the first cantilevered arm (104) and the second cantilevered arm (106) comprise fingers (146) configured to interlock with reciprocal fingers (210) of the edge portion of the panel (200).

9. The clip system (100) of any of the above claims, wherein one or both of the first cantilevered arm (104) or the second cantilevered arm (106) comprise one or more windows (160).

10. The clip system (100) of any of the above claims, wherein the edge portion of the panel (200) comprises an edge trim (202) covering an edge of the panel (200).

11. A method for a clip system (100) according to any of the above claims, the method comprising:
securing the clip system (100) to the edge portion of the panel (200); and
securing the portion of the wire (220,230) to the wire retainer (110).

12. A system comprising:
a panel (200) including an edge portion;
a wire (220,230); and
a clip system (100) according to any of claims 1 to 11 secured to the panel (200) and retaining a portion of the wire (220,230).

13. The system of claim 12, further comprising an additional clip system secured to the same panel.

14. The system of claim 13, whereby the additional clip system retains a portion of the same wire.

15. The system of claim 13 or of claim 14, whereby the clip systems are secured to a same edge trim of the panel.
